# EUROPEAN PATENT SPECIFICATION

(11) **EP 0 832 845 B1**
(45) Date of publication and mention of the grant of the patent: **18.08.2004**
(21) Application number: 97307642.5
(22) Date of filing: 29.09.1997
(51) Int. Cl.: C01B 11/02

(54) **Use of hydrated salts to enhance performance in the production of chlorine dioxide**
Verwendung von hydrierten Salzen für eine bessere Leistung in der Herstellung von Chlordioxid
Utilisation des sels hydratés pour améliorer le rendement dans la production de dioxyde de chlore

(30) Priority: 30.09.1996 US 723070
(43) Date of publication of application: 01.04.1998
(73) Proprietor: Johnson & Johnson, New Brunswick, New Jersey 08932 (US)
(72) Inventor: Battisti, Diana L., Monmouth Junction, NJ 08852 (US); Knapp, Joseph E., Pittsburgh, PA 15237 (US)
(74) Representative: Mercer, Christopher Paul

(56) References cited:
- DE-C- 841 745
- US-A- 4 104 190
- US-A- 5 110 580
- PATENT ABSTRACTS OF JAPAN vol. 013, no. 224 (C-599), 24 May 1989 & JP 01 034904 A (JAPAN CARLIT CO LTD:THE), 6 February 1989

## Description

### FIELD OF THE INVENTION

The present invention relates generally to the preparation of chlorine dioxide. More specifically, a stream of chlorine gas is reacted in a column packed with a mixture of solid sodium chlorite and an inorganic salt containing water of crystallization. Altematively, the inorganic salt containing water of crystallization can be admixed with glass beads or a suitable diluent and packed separately from the solid sodium chlorite. The inorganic salt releases its water of hydration, providing moisture to enhance the production of chlorine dioxide and thereby increase the effective lifetime of the column.

### BACKGROUND OF THE INVENTION

Chlorine dioxide (ClO₂) is a gas of known utility. The use of chlorine dioxide gas for chemosterilizing surfaces, especially gas impermeable surfaces of implements commonly employed in the medical sciences, including surfaces formed from porcelain, ceramic, metals, plastics and glass, has been disclosed, for example, in U.S. Pat. Nos. 4,504,442 and 4,681,739 (Rosenblatt et al.).

. There are several known methods for producing chlorine dioxide gas. In one of these methods, sodium chlorite (NaClO₂) is reacted with chlorine gas (Cl₂) in a chlorine dioxide generating apparatus. When the chlorite is in solid form, the chlorine dioxide generating apparatus can be, for example, a conventional column, or a bed filled with the chlorite.

It has been discovered that the addition of moisture to the dry chlorine gas feedstream increases the yield of chlorine dioxide generated and increases the life of the column substantially without causing any undesirable side reactions. U.S. Pat. Nos. 5,110,580, 5,234,678, 5,290,524 and 5,326,546 (Rosenblatt et al.), disclose a method and apparatus for generating chlorine dioxide, which involves the addition of humidified chlorine gas. Moisture is added to the chlorine gas feedstream by passing at least part of the stream through a water bubbler. Columns fed with moisturized Cl₂ were found to produce chlorine dioxide gas at steady state levels for at least twice as long as columns fed dry Cl₂.

Although this procedure for adding moisture to a sodium chlorite column increased ClO₂ production (and hence, increased column life), there are several drawbacks associated with the process. The procedure is cumbersome, since it requires that the water level in the bubbler be monitored and filled as needed. Additionally, contacting Cl₂ gas with water results in a very corrosive mixture. which in turn leads to maintenance problems with valves and other metal items that come into contact with the mixture. The procedure also requires that the amount of moisture supplied to the chlorine gas feedstream be controlled. In order to achieve the desired results, the relative humidity (RH) needed was between 30% and 60%. Too little humidification (less than 30% RH) or excessive humidification (greater than 60% RH) resulted in shorter column life (and thus decreased ClO₂ production) than the properly humidified columns. Therefore, the need exists for an alternative means of providing moisture to the sodium chlorite column to enhance the reaction of chlorine gas with sodium chlorite in the production of ClO₂.

Sodium sulfate decahydrate, or Glauber's Salt (Na₂SO₄•10H₂O), has previously been used as an aid in the prevention of explosions in sodium chlorite generator towers. German Patent No. 841,745 (Schubert) discloses a process for the preparation of gaseous chlorine dioxide, using the known reaction of dry sodium chlorite with gaseous chlorine. Chlorine dioxide is an explosive gas which can react violently in certain situations, under particular conditions. The object of this patent was to provide a process for the explosion-proof preparation of ClO₂. This was accomplished by mixing a large amount (33%) of Na₂SO₄•10H₂O with the dry sodium chlorite. The patent discloses that the water of crystallization in the hydrated salt is released when heat is generated by too rapid of a reaction between the NaClO₂ and the Cl₂ gas in the tower, which "quenches" any explosion-generating "sparks". It is further disclosed that in order to prevent liquification of the contents of the tower and subsequent formation of a pasty or cake-like substance, which would block the column and impede the flow of ClO₂ gas, it is advisable to add water-absorbing diluents to the column mixture. There is no suggestion of the availability or use of the water from the hydrated salt to enhance the ClO₂-producing reaction or to prolong the life of the generating column.

The objects and advantages of the invention will become more fully apparent from the description and claims which follow or may be learned by the practice of the invention.

### SUMMARY OF THE INVENTION

The present invention relates to a method and composition for generating chlorine dioxide gas as defined in the appendant claims. In a preferred embodiment, the inorganic salt is sodium sulfate decahydrate, or Glauber's Salt. The method of the present invention not only increases the total amount of chlorine dioxide produced over that produced under dry conditions, but also increases the lifetime of a sodium chlorite chlorine dioxide-generating column.

The present invention utilizes the moisture from the hydrated salt to enhance the production of chlorine dioxide.

The sodium chlorite can be admixed directly with the hydrated salt in the generator. Alternatively, the hydrated salt can be mixed with a suitable diluent, such as small glass beads, and packed on top of the chlorite or packed into a separate column. If a separate column is used, the chlorine gas feedstream is passed first through the column containing the hydrated salt and then through the column containing the sodium chlorite.

### BRIEF DESCRIPTION OF THE DRAWINGS

The following drawings are illustrative of embodiments of the invention and are not meant to limit the scope of the invention as encompassed by the claims.
Figure 1 is a schematic diagram showing the experimental apparatus setup for determining the amount of moisture released by mixing an inorganic salt containing water of hydration with sodium chlorite in a chlorine dioxide generating column;
Figure 2 is a graphical presentation of the relative humidity of the column effluents of Examples 1, 2, and 3 over time;
Figure 3 is a graphical presentation of the relative humidity of the column effluents of Examples 3 and 4, which were stored at different temperatures;
Figure 4 is a graphical presentation of the relative humidity of the column effluents of Examples 2 and 5, comparing two different brands of sodium sulfate decahydrate; and
Figure 5 is a partial cross-sectional view, in elevation, of one embodiment of the chlorine dioxide generating column of the present invention, showing the inorganic salt containing water of crystallization in a separate layer above the sodium chlorite layer.

### DETAILED DESCRIPTION OF THE PREFERRED EMBODIMENTS

In the preferred embodiment, an inorganic salt containing water of crystallization is added to the chlorine dioxide (ClO₂) generating column, to provide a source of moisture for enhancing the ClO₂-producing reaction. This moisture results in greater production of chlorine dioxide over time, and thus, increases the effective life of the generating column.

The production of chlorine dioxide from sodium chlorite (NaClO₂) is preferably begun by introducing a gaseous stream comprising chlorine gas (Cl₂) into a chlorine dioxide generator, i.e., a sodium chlorite column, bed, or the like, under ambient (or slightly negative or elevated) pressure and temperature. The chlorine gas is preferably diluted with an inert carrier gas such as nitrogen.

A simplified description of the reaction of the chlorine gas with the sodium chlorite is as follows:

2NaClO₂ + Cl₂ = 2NaCl + 2ClO₂

Since chlorine dioxide gas is relatively unstable, the chlorine gas concentration in the feed gas is preferably limited to less than about 7.5 percent. Since two moles of chlorine dioxide are theoretically produced for every mole of chlorine gas, a gas stream comprising about 15 percent chlorine dioxide is produced. More preferably, the chlorine gas is included in the feed gas at a concentration of about 2 to about 4 percent. The reaction is preferably conducted at mild temperatures, i.e., not higher than about 45° C.

The solid sodium chlorite composition used in the preparation of the chlorine dioxide is preferably technical or food grade sodium chlorite, comprising from about 70 to 90 percent sodium chlorite and from about 10 to 30 percent impurities, such as sodium hydroxide. Technical grade sodium chlorite is available from a number of manufacturers, including Vulcan Corporation. The sodium chlorite is preferably in the flaked, as opposed to the finely powdered form. The finely powdered form tends to pack too tightly in the column, impeding the flow of chlorine dioxide gas produced. For this reason, flaked technical grade sodium chlorite is preferred over others, which are finely powdered. If powdered sodium chlorite is used, anti-caking agents such as glass beads or sand must be added to prevent caking in the column.

In the preferred embodiment, it has been discovered that the addition of inorganic salts containing some water of crystallization, preferably large amounts of water of crystallization, to the sodium chlorite in the generating column, provides a source of moisture to the reaction, resulting in the sustained production of chlorine dioxide over a longer period of time and thus, increased column life.

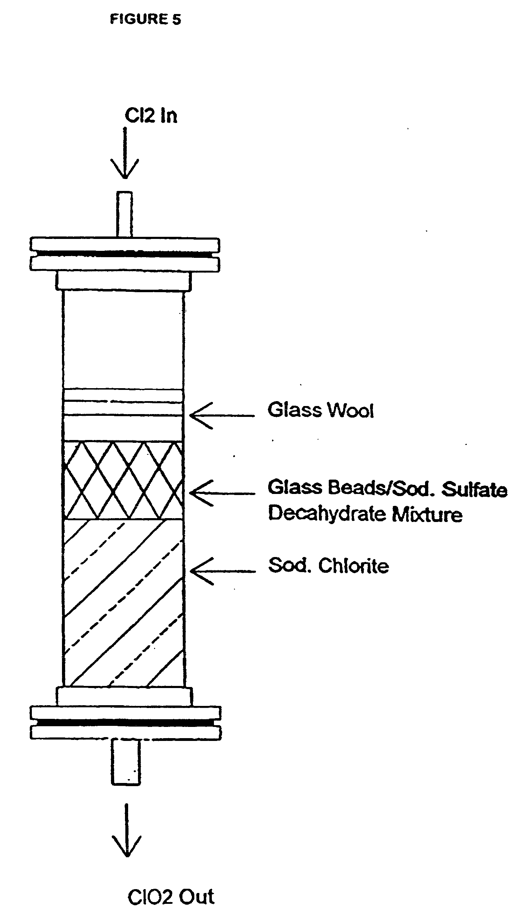

In one embodiment, the inorganic salt containing water of crystallization can be admixed directly with the sodium chlorite and placed in the chlorine dioxide generator. In a second embodiment, the inorganic salt can be mixed with a suitable diluent, such as small glass beads, and packed as a separate layer on top of a layer of sodium chlorite in the generator, as shown in Figure 5. In a third embodiment, the hydrated salt is mixed with a suitable diluent and packed into one column, and the sodium chlorite is packed into a second column. In this third embodiment, the chlorine feed gas is passed first through the hydrated salt column to provide moisture to the feedstream and then through the sodium chlorite column to produce chlorine dioxide.

The preferred salt is sodium sulfate decahydrate, or Glauber's Salt (Na₂SO₄•1OH₂O), which is commercially available from a number of manufacturers, including Aldrich Chemical and Sigma Chemical. Other salts with water of hydration may be used. However, to be suitable for use as a humidifying agent, the compound must not only be non-reactive when contacted with sodium chlorite or chlorine, but also must be capable of sustained release of moisture when contacted by a dry gas stream.

The addition of even a slight amount of hydrated salt will enhance the ClO₂-producing reaction. It has been determined, however, that if the hydrated salt is admixed with the sodium chlorite in the column in an amount greater than 30% by weight of the sodium chlorite, the composition of the column changes, resulting in a decline in production of chlorine dioxide and a corresponding decrease in effectiveness of the column. Therefore, the amount of hydrated salt present is preferably between about 1.0 and 20% by weight of sodium chlorite, more preferably about 5 to about 15%, and most preferably about 10%. Of course, it should be understood that even large amounts of salt, such as 70% or greater, will still result in the production of some chlorine dioxide, but only for a short time. At higher weight percentages, an excess quantity of water of crystallization is released from the salt, which flows into the sodium chlorite and causes it to become damp and caked, preventing the free flow of chlorine dioxide gas. It should also be understood that if salts other than Glauber's Salt are used, the amount necessary to produce satisfactory results will vary depending on the salt chosen.

Unlike in the bubbler process, as disclosed in U.S. Pat. Nos. 5,110,580, 5,234,678, 5,290,524, and 5,326,546, the present invention obviates the need for passing the feed gas through a water bubbler to provide a source of moisture, and thereby avoids the previously-mentioned problems associated with that process. Moisture is provided instead by mixing a salt containing water of crystallization, such as Glauber's Salt, with the sodium chlorite in the column, or by contacting the chlorine feedstream with the hydrated salt prior to introducing it into the sodium chlorite column. Preferably, the chlorine feed gas is supplied as a mixture of chlorine gas in nitrogen gas. Alternatively, chlorine gas may be supplied by releasing it from a storage vessel into a gas line, where it is combined with an inert carrier gas (such as nitrogen). The feed gas is then injected into the generator column containing the mixture of sodium chlorite and hydrated salt (or into the column containing the hydrated salt, if a separate column is used for the sodium chlorite). The chlorine gas reacts with the sodium chlorite to produce chlorine dioxide. The effluent chlorine dioxide gas stream can then be subjected to various treatment procedures, and ultimately, put to the desired end use. If dry ClO₂ gas is desired, soda lime, CaCl, or other drying agents may be used. If more moisture is desired in the ClO₂ gas, additional moisture can be added further downstream following generation.

As the following examples will demonstrate in more detail, chlorine dioxide generating columns containing a hydrated salt are capable of maintaining a reasonably constant level of moisture (approximately 40% RH) in the chlorine dioxide effluent for a time sufficient for complete utilization of the chlorite in the column. Columns containing only sodium chlorite, without any hydrated salt, did release some moisture, but the release was of far shorter duration and magnitude than was observed for the columns containing chlorite admixed with a hydrated salt. It was found that a column containing 20% by weight of a hydrated salt provided approximately the same effluent RH, but maintained it for a longer period of time, than a column containing 10% by weight of the salt. This indicates that hydrated salts are capable of a sustained, reasonably controlled release of water of hydration, and the salts provide moisture at a level sufficient for optimal chlorine dioxide generation.

Columns packed with sodium chlorite admixed with 10% of its weight of a hydrated salt provided an equivalent level of moisture to the columns, produced the same level of chlorine dioxide, and exhibited equivalent steady-state column lifetime, as columns which were packed with sodium chlorite only and subjected to the water bubbler method. Chemical analysis of samples of spent column packing confirmed that there was substantially complete utilization of chlorite in those columns containing the hydrated salt, while there was incomplete utilization in the columns packed without a hydrated salt The amount of hydrated salt required for optional column performance (approximately 10% by weight) is far less than that suggested in German Pat. No. 841,745 (33%). Further, the present invention provides a free-flowing mixture that can be readily packed into the generator columns without caking and which results in no blocking during the generation of chlorine dioxide.

### EXAMPLES 1-5

Generator columns were fabricated from 6 inch drying tubes (5/8 in. ID). Plugs of glass wool were used to retain column packaging material. Columns were packed with sodium chlorite technical grade (Vulcan Corporation, 79% NaClO₂) and sodium sulfate decahydrate (Fisher or Aldrich certified Na₂SO₄• 10H₂O). Since this salt tends to form an aggregate mass, a small amount was transferred to a bag and all lumps physically crushed prior to use. A twenty gram quantity of sodium chlorite was transferred into a beaker and mixed with 0, 2, or 4 grams of sodium sulfate decahydrate. The mixture was then packed into the column using a powder funnel with a 1/4 inch diameter opening. Columns were stored at either 25 or 37° C.

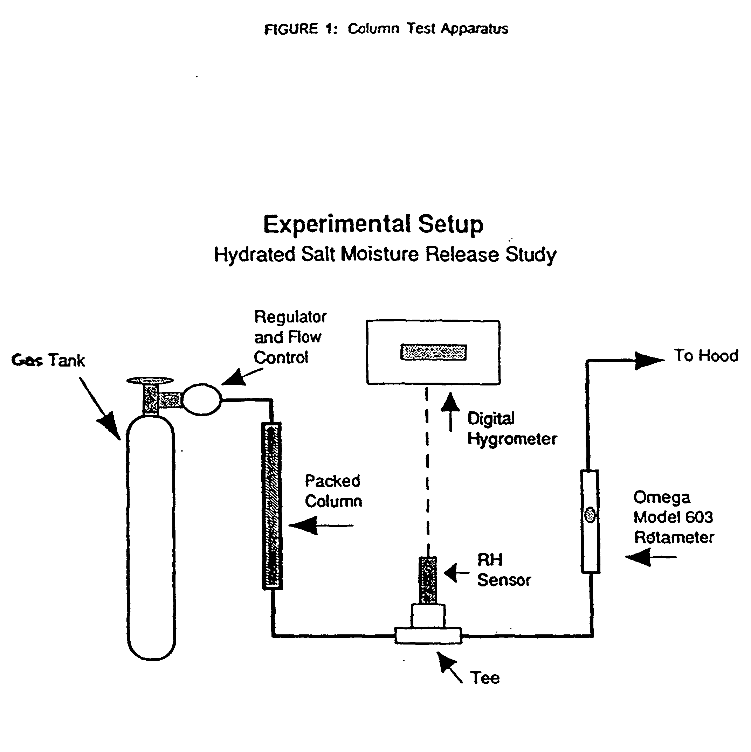

The experimental apparatus was assembled as shown in Figure 1. A nitrogen feedstream was substituted for the Cl₂ feedstream to prevent corrosion of the moisture (relative humidity) sensor employed. Nitrogen flow was controlled by a regulator and a needle valve. Relative humidity was monitored by a RH/temperature sensor probe (Fisher Scientific Fast Response Digital Hygrometer/Thermometer), which was inserted through a tee in the effluent line. Column effluent flow rate was monitored with an Omega Model 603 Rotameter. All studies were conducted at ambient temperature.

A total of five columns were packed and stored according to the following specifications.

| **Example No.** | **NaClO**_{**2**} **(g)** | **Na**_{**2**}**SO**_{**4**}**•10H**_{**2**}**O (g)** | **Storage Temperature (°C)** |
|---|---|---|---|
| 1 | 20 | 0 | 27 |
| 2 | 20 | 2 | 27 |
| 3 | 20 | 4 | 27 |
| 4 | 20 | 4 | 37 |
| 5 | 20 | 2* | 27 |

| | | | |
|---|---|---|---|
| * Fisher brand sodium sulfate decahydrate was used. Aldrich brand was used in all other columns. | | | |

Testing was conducted by introducing nitrogen into the column until the flow rate of the column effluent was 1.97 L/min. Flow was maintained while the relative humidity of the column effluent gas was monitored by a RH/temperature sensor probe with automatic temperature compensation. The percent relative humidity of column effluent gas was recorded over time for each column studied. These results are presented in Table 1

**TABLE 1**

| **Percent Relative Humidity of Column Effluent Gas** | | | | | |
|---|---|---|---|---|---|
| Minutes | No.1 | No.2 | No.3 | No.4 | No.5 |
| 1 | 38.80 | 45.53 | 55.92 | 74.10 | 49.67 |
| 2 | 40.89 | 46.22 | 55.80 | 71.72 | 50.27 |
| 3 | 40.95 | 46.77 | 55.44 | 71.98 | 50.27 |
| 4 | 40.69 | 46.97 | 55.19 | 72.47 | 50.02 |
| 5 | 39.82 | 46.84 | 55.01 | 72.38 | 49.64 |
| 6 | 38.58 | 46.44 | 54.60 | 71.96 | 49.03 |
| 7 | 38.49 | 45.84 | 54.03 | 71.27 | 48.34 |
| 8 | 37.74 | 45.05 | 53.11 | 70.43 | 47.45 |
| 9 | 36.76 | 44.22 | 52.31 | 69.47 | 46.59 |
| 10 | 35.57 | 43.36 | 51.36 | 68.46 | 45.45 |
| 15 | 30.42 | 40.88 | 47.46 | 63.01 | 43.07 |
| 20 | 26.96 | 39.89 | 45.57 | 51.59 | 41.66 |
| 25 | 23.39 | 39.18 | 44.73 | 44.09 | 41.00 |
| 30 | 19.47 | 38.45 | 44.36 | 41.92 | 40.20 |
| 35 | 15.18 | 37.70 | 44.18 | 40.88 | 39.31 |
| 40 | 10.75 | 37.18 | 43.03 | | 38.62 |
| 45 | 7.86 | 36.56 | 42.08 | | 37.85 |
| 50 | | 35.90 | 41.41 | 39.45 | 36.89 |
| 55 | | 35.35 | 40.78 | | 35.94 |
| 60 | | 34.68 | 40.38 | 38.56 | 34.99 |
| 75 | | 31.22 | 39.34 | 37.16 | 31.57 |
| 90 | | 26.68 | 37.78 | 36.14 | 27.50 |
| 105 | | 19.03 | 36.65 | 34.77 | 21.06 |
| 120 | | 4.75 | 34.90 | 33.28 | 13.17 |
| 135 | | | 32.46 | 31.24 | 6.02 |
| 150 | | | 29.70 | 29.06 | |
| 165 | | | 26.92 | 26.49 | |
| 180 | | | 22.30 | 23.43 | |
| 195 | | | 16.30 | 18.26 | |
| 210 | | | 10.08 | 9.76 | |

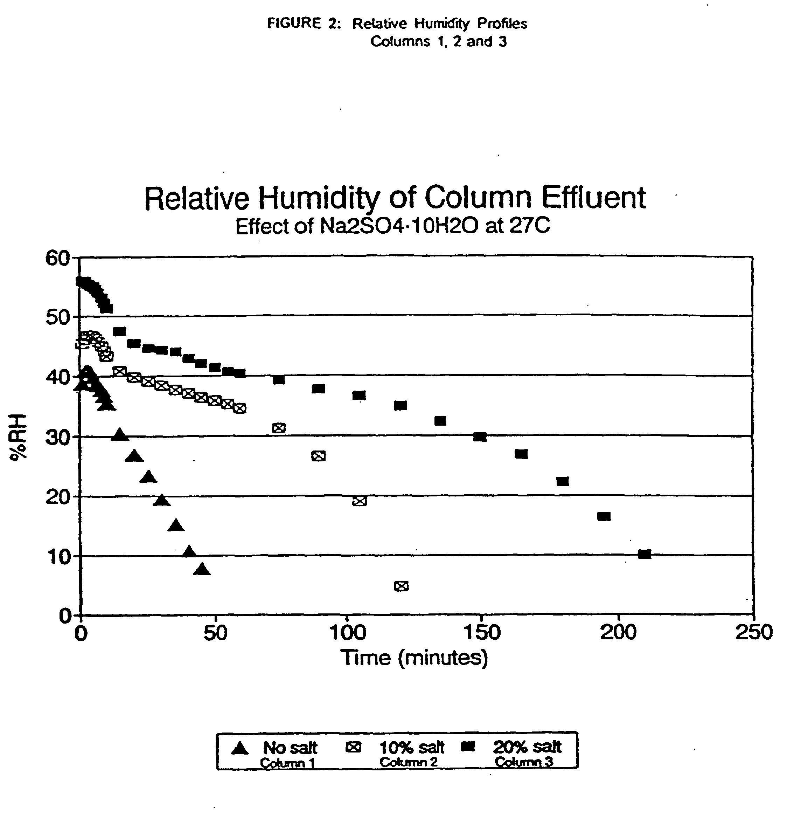

It was observed that Example 1, which contained only sodium chlorite, sustained effluent relative humidity greater than 30% for only 15 minutes while the column containing 20% by weight sodium sulfate decahydrate (Example 3) sustained this relative humidity for 135 minutes. Example 2, which contained 10% sodium sulfate decahydrate, produced an effluent gas with relative humidity in excess of 30% for 75 minutes. The relative humidity profile of these three columns versus time is provided in Figure 2.

All columns displayed a rapid decline in relative humidity of the effluent gas during the initial 2 to 10 minutes. The column containing chlorite alone exhibited a nearly linear decline in humidity of effluent after an initial 10 minute period. Columns containing salt, however, sustained relative humidities in excess of 30% for longer than 1 hour.

Since chlorine dioxide generator columns may be exposed to conditions of extreme heat during shipping, and it is known that sodium sulfate decahydrate melts at 32.4°C (90.4°F), it was hypothesized that such salts may not be ideal in this application. Although it has been suggested that the water of crystallization released from Glauber's Salt as a result of heating will reform upon cooling, it is believed that this is unlikely.

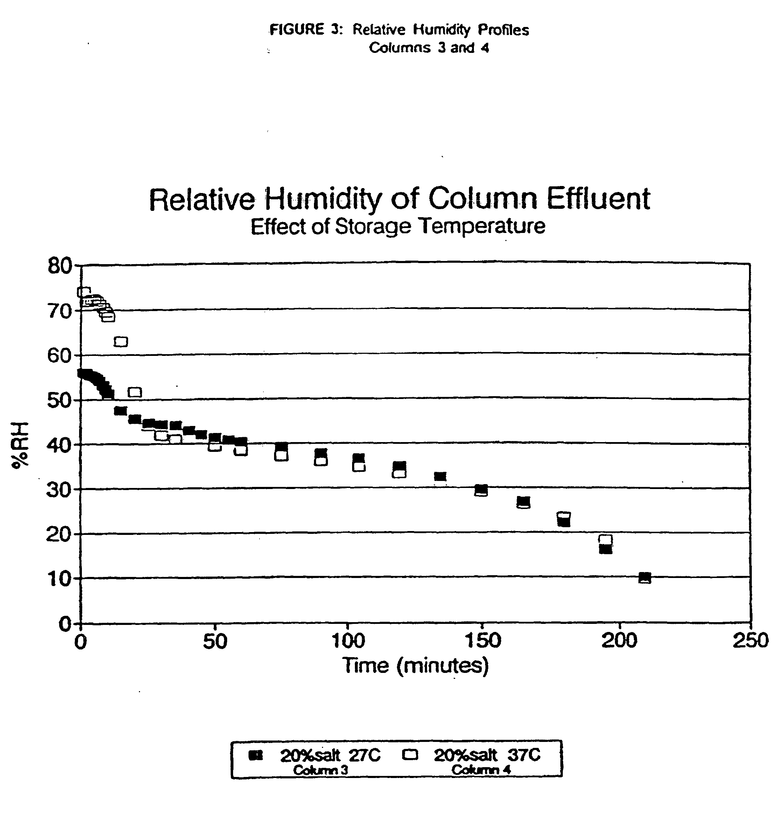

In an attempt to address these concerns, Example 4 containing 20% sodium sulfate decahydrate was held at 37°C for a short time (20 hours). When run, it produced an effluent gas with initial relative humidity of 74%. This was 20% higher than that of the column stored at room temperature. Within 20 minutes the relative humidity of the effluent had fallen to 52%. By 50 minutes the relative humidity of the effluent was only 39%, slightly lower than that observed for the 27°C column (41%) at 50 minutes. Interestingly, however, after 50 minutes the humidity profile of the 37°C column remained parallel with, although slightly lower than, that of the 27°C column for the duration of monitoring. Both columns continued to produce effluent gas with relative humidity in excess of 30% for 135 minutes. The relative humidity profiles of these columns are compared in Figure 3.

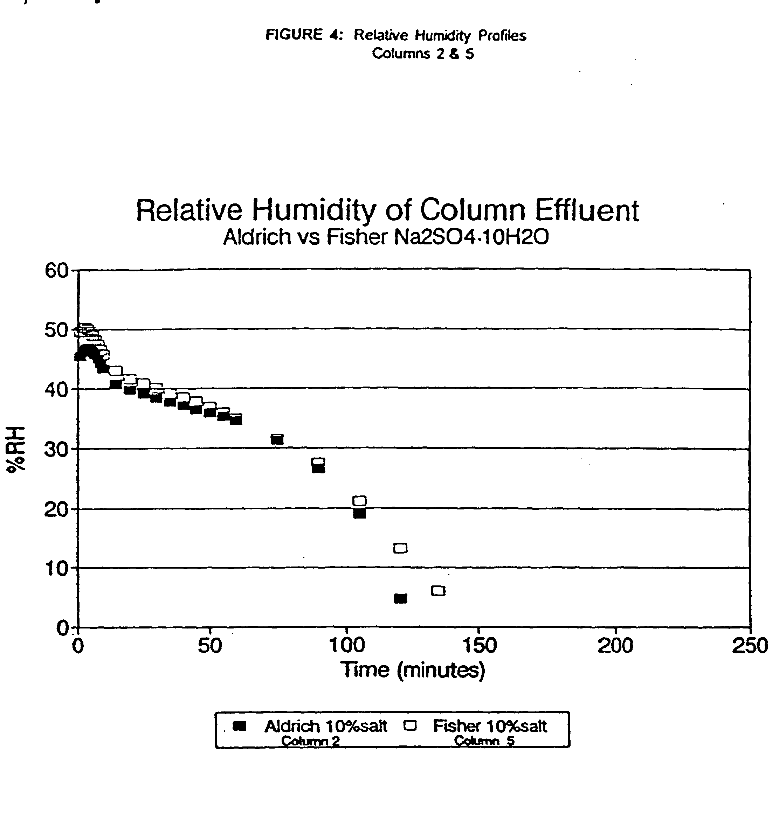

A new lot of sodium sulfate was obtained from a different manufacturer (Fisher). To substantiate the equivalence of these two products a test comparison was made. Examples 2 and 5, which contained equal amounts of sodium sulfate decahydrate (Aldrich or Fisher respectively), exhibited no significant differences in moisture release profiles (Figure 4).

Relative humidity results obtained from examples 1-5 demonstrate that sodium sulfate decahydrate, when contacted with a dry gas and in the presence of sodium chlorite, will release moisture slowly over a sustained period of time, thereby obviating the requirement for humidification of feed gas in order to maximize chlorine dioxide production and thereby increase the generator column lifetime.

### EXAMPLES 6 - 13

Seven columns were packed each with 3000 grams of Olin sodium chlorite (79% NaClO₂) admixed with 300 grams of Na₂SO₄• 10H₂O to give a packed/bed height of approximately 33 inches. After sealing the end fittings, three of the columns were stored at ambient temperature (Examples 7-9), two at 37°C (Examples 10 and 11) and two were kept in a cold room at 6°C (Examples 12 and 13). Another column was packed in the same manner with 3000 grams of sodium chlorite only (Example 6)

After a period of storage and prior to evaluation, each of the columns was conditioned with 11 liters of CO₂ (flow rate approximately 176 ml/minute). They were then returned to storage (under the same conditions as before for a period of at least seven months) prior to being run.

For a given run, a 2% chlorine feed gas flow of 26 L/min. was initiated and the column ClO₂ output was monitored by UV detection at 360 nm. The feed gas flow rate was maintained at 26 L/min. until the ClO₂ production declined. A decline of 2% T from the steady state concentration (typically about 10% T) was defined as the time of exhaustion for the column. Results of the column lifetime evaluations are given in Table 2.

**TABLE 2:**

| **Column Lifetimes** | | | |
|---|---|---|---|
| **ClO**_{**2**} **Flow Rate 25.9 L/min. (Approx. 80 mg/L)** | | | |
| **Example No.** | **Treatment** | **Lifetime (min.)** | **Average** |
| 6 | No Salt/Room Temp | 300 | 300 (5 hours) |
| | | | |
| 7 | Room Temp | 746 | |
| 8 | Room Temp¹ | 729 | |
| 9 | Room Temp | 705 | 726.7 (12.1 hours) |
| | | | |
| 10 | Elevated Temp (37°C) | 444 | |
| 11 | Elevated Temp (37°C) | 400 | 422 (7.03 hours) |
| | | | |
| 12 | Cold Temp² (Approx. 6°C) | 620 | |
| 13 | Cold Temp² (Approx. 6°C) | 682 | 651 (10.85 hours) |

| | | | |
|---|---|---|---|
| ¹ Column had been run 15 minutes with 2% Cl₂ as part of another test prior to the start of this test. The lifetime given includes this 15 minutes. | | | |
| ² Column showed a delay in come up time. | | | |

The lifetimes of columns stored for extended periods at elevated temperature are approximately 40% less than controls stored at room temperature. Since the column entrance and exit fittings were tightly plugged during storage it does not seem likely that evaporation of the water from the hygroscopic salt admixed with the sodium chlorite can account for this difference. A possible explanation might be that since the melting point of sodium sulfate decahydrate (32°C) is below that of the storage temperature, the water of crystallization was released and over time migrated into the surrounding sodium chlorite. This free moisture would be quickly swept from the column rather than being slowly released as it is from the intact hygroscopic salt. The chemical composition of the exhausted column packing also differed from that of controls.

Columns stored in the cold room had on average 10% shorter lifetimes than columns stored at room temperature. In addition, neither column immediately produced steady state concentrations of ClO₂.

Storage at room temperature afforded columns with the longest lifetimes. Also, residues from these columns contained less chlorate than residues from columns stored at an elevated temperature.

Based upon the known flow rate and ClO₂ concentration, the amount of ClO₂ produced can be calculated. Thus, if a constant flow rate of 25.9 L/min. at 80 to 85 mg/L ClO₂ for the average time of 726.7 minutes is assumed, a typical room temperature stored column containing 3000 grams of 79% NaClO₂ should produce between 1506 and 1600 grams of ClO₂. If one assumes 100% conversion of the 2370 grams of available NaClO₂ in such a column, the ClO₂ produced would be 1715 grams. Thus, the apparent efficiency of the columns is 88 to 93%. It should also be remembered that these columns were not run to the point where ClO₂ production ceased, but rather, until the concentration had just begun to drop.

Assuming the same flow rate and a 2% by volume Cl₂ concentration, the theoretical column lifetime was calculated and found to be 616.5 minutes. The average lifetime of columns kept at room temperature was 726.7 minutes, a difference of approximately 18%. This discrepancy may be the result of several factors. It might be partially explained by inaccuracies in the measure of flow rates. Also, reaction of Cl₂ in the feed stream with alkali not neutralized by the conditioning procedure would reduce the amount available for reaction with NaClO₂ and thus increase the column lifetime. This explanation seems plausible in view of the pH values observed for the various column samples. The pH values for samples obtained from the column bottoms clearly indicate that there is still a significant amount of strong alkali left in the exhausted columns.

### EXAMPLES 14 - 19

The following table summarizes additional experiments that were conducted. All columns were constructed from 2 inch diameter polyvinyl chloride (PVC) and contained 500 grams technical grade sodium chlorite. Each column contained additional agents, as detailed below. For comparative purposes, one column was run using the water bubbler method to supply moisture to the process, and one column was run with no additional agents being present. Each column was reacted with 2% chlorine in nitrogen at a rate of 11 liters per minute. Examples 15 and 16 were conducted using the experimental apparatus shown in Fig. 5. These columns contained one layer of sodium sulfate decahydrate admixed with glass beads, on top of a separate layer of solid sodium chlorite. In Examples 17 and 18, the sodium sulfate decahydrate was admixed with the sodium chlorite.

| **Example No.** | **Description of Additives** | **Run Time (min)** | **ClO**_{**2**} **Produced (g)** |
|---|---|---|---|
| 14 | Cl₂ feed through a water bubbler (>90% RH) | 173 | 190 |
| 15 | 153.6 g Na₂SO₄•10H₂O mixed with glass beads | 171 | 188 |
| 16 | 76.8g Na₂SO₄•10H₂O mixed with glass beads | 168 | 185 |
| 17 | 75g Na₂SO₄•10H₂O | 195 | 214 |
| 18 | 50g Na₂SO₄•10H₂O | 79 | 87 |
| 19 | no additives | 51 | 56 |

As this data demonstrates, columns packed with sodium chlorite and an inorganic salt containing water of crystallization clearly perform better than those columns containing no additives, and equal to or better than those subjected to the water bubbler method, in terms of column lifetime and amount of chlorine dioxide produced.

It is to be understood that although the present invention has been described with reference to a preferred embodiment, various modifications, known to those skilled in the art, may be made to the structures and process steps presented herein without departing from the invention as recited in the several claims appended hereto.

## Claims

1. A method for producing chlorine dioxide gas, comprising contacting a dry feedstream of chlorine gas with a composition comprising (a) solid sodium chlorite, and (b) an inorganic salt having water of crystallization, said inorganic salt being present in an amount from 1.0 to 20 percent by weight of said sodium chlorite, wherein said composition is in a column or consecutive columns containing said inorganic salt and said sodium chlorite.

2. The method of claim 1 wherein said inorganic salt is present in an amount of from 5 to 15 percent, preferably about 10 percent, by weight of said sodium chlorite.

3. The method of claim 1 or claim 2, wherein said inorganic salt is sodium sulfate decahydrate.

4. The method of any one of claims 1 to 3, wherein said sodium chlorite is technical grade.

5. The method of any one of claims 1 to 4, wherein said sodium chlorite and said inorganic salt are admixed.

6. The method of any one of claims 1 to 4, wherein said sodium chlorite is separated from said inorganic salt, said dry feedstream of chlorine gas first contacting said inorganic salt and then contacting said sodium chlorite.

## Patentansprüche

1. Verfahren zur Herstellung von Chlordioxidgas, welches das Kontaktieren eines trockenen Einspeisungsstroms von Chlorgas mit einer Zusammensetzung umfaßt, die a) festes Natriumchlorit und b) ein anorganisches Salz umfaßt, das Kristallisationswasser enthält, wobei das anorganische Salz in einer Menge von 1,0 bis 20 Gewichtsprozent bezogen auf das Natriumchlorit vorhanden ist, wobei sich die Zusammensetzung in einer Säule oder in aufeinanderfolgenden Säulen befindet, die das anorganische Salz und das Natriumchlorit enthält/enthalten.

2. Verfahren nach Anspruch 1, wobei das anorganische Salz in einer Menge von 5 bis 15 Gewichtsprozent, bevorzugt ungefähr 10 Gewichtsprozent, bezogen auf das Natriumchlorit vorhanden ist.

3. Verfahren nach Anspruch 1 oder Anspruch 2, wobei das anorganische Salz Natriumsulfatdecahydrat ist.

4. Verfahren nach einem der Ansprüche 1 bis 3, wobei das Natriumchlorit technisch rein ist.

5. Verfahren nach einem der Ansprüche 1 bis 4, wobei das Natriumchlorit und das anorganische Salz vermischt sind.

6. Verfahren nach einem der Ansprüche 1 bis 4, wobei das Natriumchlorit vom anorganischen Salz getrennt ist und der trockene Einspeisungsstrom aus Chlorgas zuerst das anorganische Salz und dann das Natriumchlorit kontaktiert.

## Revendications

1. Procédé de production de dioxyde de chlore gazeux, qui comprend la mise en contact d'un courant de charge sec de chlore gazeux avec une composition comprenant (a) du chlorure de sodium solide, et (b) un sel inorganique ayant de l'eau de cristallisation, ledit sel organique étant présent en une quantité de 1,0 à 20 % en poids par rapport audit chlorite de sodium, ladite composition se trouvant dans une colonne ou dans des colonnes successives contenant ledit sel inorganique et ledit chlorite de sodium.

2. Procédé selon la revendication 1, dans lequel ledit sel inorganique est présent en une quantité de 5 à 15 %, de préférence d'environ 10 % en poids par rapport audit chlorite de sodium.

3. Procédé selon la revendication 1 ou 2, dans lequel ledit sel inorganique est le sulfate de sodium décahydrate.

4. Procédé selon l'une quelconque des revendications 1 à 3, dans lequel ledit chlorite de sodium est de qualité technique.

5. Procédé selon l'une quelconque des revendications 1 à 4, dans lequel on procède au mélange dudit chlorite de sodium et dudit sel inorganique.

6. Procédé selon l'une quelconque des revendications 1 à 4, dans lequel ledit chlorite de sodium est séparé dudit sel inorganique, ledit courant de charge sec de chlore gazeux entrant en contact d'abord avec ledit sel inorganique, puis entrant en contact avec ledit chlorite de sodium.
